# EUROPEAN PATENT APPLICATION

(11) **EP 1 689 161 A1**
(43) Date of publication of application: **09.08.2006**
(21) Application number: 05290228.5
(22) Date of filing: 02.02.2005
(51) Int. Cl.: H04M 17/00, H04M 17/02, H04M 3/22, H04Q 3/00, H04M 11/04

(54) **Data dispatching device for a payphone management system**

(71) Applicant: Schlumberger Payphones SAS, 92541 Montrouge Cedex (FR)
(72) Inventor: Lefevre, Eric, c/oSchlumberger Payphones SAS, 92541 Montrouge Cedex (FR); Galvan, Rodrigo, c/oSchlumberger Payphones SAS, 92541 Montrouge Cedex (FR); Sutedjo, Nanik M., c/oSchlumberger Payphones SAS, 92541 Montrouge Cedex (FR)
(74) Representative: Weihs, Bruno Konrad

(57) **Abstract**

The present invention relates to a method and a data dispatching device (13) for distribution of data between a Payphone Management System (PMS) for managing installed bases (10), such as payphones, and remote end users' receiving modules (141, 142, 143). It relates also to a telephony system (1) including a PMS (11) and the data dispatching device (13).

According to an aspect of the invention, the data dispatching device comprise extracting means to automatically extract at least one kind of data transmitted from the installed bases to the Payphone Management System and dispatching means to dispatch the extracted date to a selected set of remote receiving modules at a preselected and modifiable frequency.

## Description

### Background of Invention

The present invention relates to a method and a data dispatching device for distribution of data between a Payphone Management System (PMS) for managing installed bases, such as payphones, and remote end users' receiving modules. It relates also to a telephony system including a PMS and said data dispatching device.

A payphone network comprises installed bases, such as payphones, distributed over a given area, and connected to a communication network, consisting for example of a Public Switched Telephone Network (PSTN), with which they communicate using a modem.

A payphone network generally comprises one or several management servers, often called PMS ("Payphone Management System"), enabling the network operator to supervise the various payphones. The one or several PMS may be connected to the PSTN by means of a modem. One of the PMS's functions is to exchange with the telephones information concerning the operation of the telephony system. A payphone system including a PMS is described for example in US 6,766,005.

The increased quantity of payphones managed by such PMSs makes it necessary to improve and adapt the maintenance and management methods and tools for the installed bases. Often, the control activity and management of the installed bases is done and monitored by a central site, while the daily maintenance and field intervention are coordinated by regional sites responsible for one or several given payphone areas. Said maintenance and field intervention depend on the information retrieved from the PMS on a daily basis. Therefore, the operators in each regional site have to check each day the information retrieved from the PMS in order to plan the necessary maintenance and field intervention on the installed bases of their respective areas. Such checks in the case of telephony systems with a high number of installed bases are time consuming and laborious. The invention aims at solving these problems by providing a telephony system with a PMS for managing installed bases, such as payphones, in which the right information retrieved from the PMS for given installed bases is automatically dispatched to the right people at the right time.

### Summary of Invention

According to a first aspect, the invention provides a data dispatching device for distribution of data between a Payphone Management System for managing installed bases and remote end users' receiving modules, comprising extracting means to automatically extract at least one kind of data transmitted from the installed bases to the Payphone Management System and dispatching means to dispatch the extracted date to a selected set of remote receiving modules.

Regarding a first embodiment, the data dispatching device further comprises storing means to store preconfigured requests in which each kind of data to be extracted is defined.

Regarding a further embodiment, the requests are stored in XML files.

Regarding a further embodiment, the storing means further store predefined tasks, each task specifying a frequency occurrence, a specific request defining the kind of data to be extracted and a list of remote receiving modules to which the data is to be dispatched.

Regarding a further embodiment, the data dispatching device further comprises a filtering rules configuration module with filtering rules that will associate a given end user only to the part of the tasks that concerns him with all available tasks.

According to a second aspect, the invention provides a telephony System comprising at least one Payphone Management System, installed bases managed by said Payphone Management System and remote end users' receiving modules, wherein it further comprises :
a data dispatching device according to any preceding claims for distribution of data between the Payphone Management System and the remote receiving modules, and
dispatching media to dispatch the extracted data to the selected set of remote receiving modules.

Regarding a first embodiment, the telephony system comprises :
at least two Payphone Management Systems, each Payphone Management System managing a number of installed bases, said Payphone Management Systems being connected through a private network, and
one data dispatching device for distribution of data between the network of Payphone Management Systems and the selected set of remote receiving modules.

Regarding a further embodiment, the dispatching media include e-mail and fax, or others such as SMS.

According to a third aspect, the invention provides a method for distributing data between a Payphone Management System for managing installed bases and remote end users' receiving modules comprising:
a. automatically extracting at least one kind of data transmitted from the installed bases to the Payphone Management System and
b. dispatching the extracted data by a given dispatching media to a selected set of the remote receiving modules.

Regarding a first embodiment, the method further comprises first configuring requests in which each kind of data to be extracted is defined.

Regarding a further embodiment, the method further comprises defining tasks, each task specifying a specific frequency occurrence, a specific request defining the kind of data to be extracted and a list of end users that will receive the data extracted by this task's request.

Regarding a further embodiment, the method further comprises subscription by the end users to given tasks, in order to have their receiving modules put in the lists of remote receiving modules of the subscribed tasks.

Regarding a further embodiment, the method further comprises the declaration by the end users of a media configuration of their receiving modules in order to select the dispatching media.

### Brief Description of Drawings

Further features and advantages of the invention will become more readily apparent from the following description of preferred embodiments with reference to the appended drawings, in which:

Fig 1 is a schematic diagram of a telephony system including a data dispatching device according to an example embodiment of the invention;

Fig 2 is a schematic diagram showing an example of a content of a task as configured in the data dispatching device according to the invention;

### Detailed Description

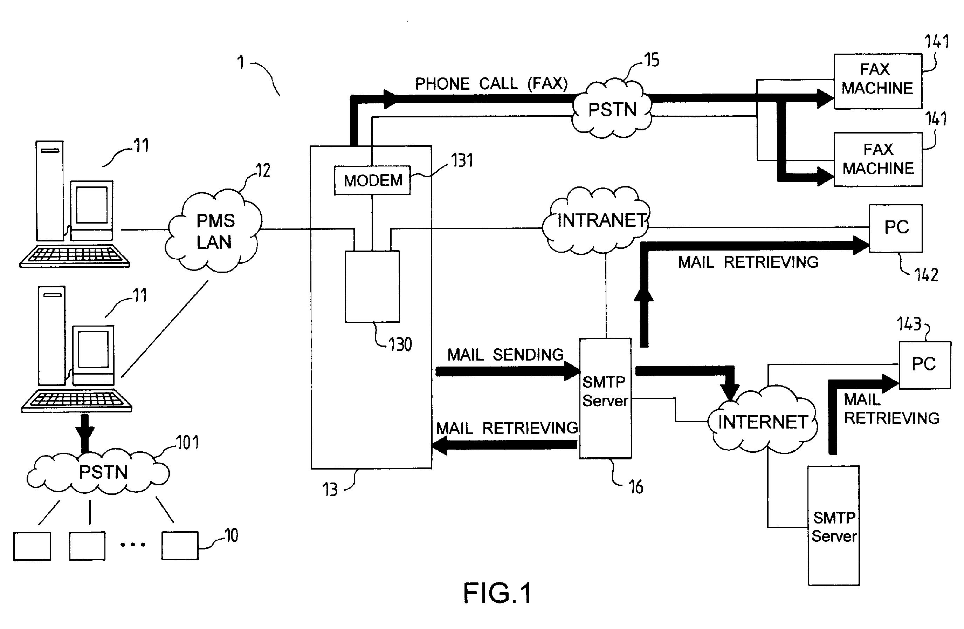

Fig 1 schematically illustrates a telephony system 1 according to the invention. The telephony system 1 includes a number of installed bases 10, such as payphones intended to be used by the public in self-service. The payphones are connected to a communication network 101 , consisting for instance of the Public Switched Telephone Network (PSTN). They are distributed over a given territory, installed in public places, such as the street, or semi-public places, such as commercial centres, airports, hotel lounges, restaurants, shops, etc. The telephony system 1 further comprises one or several management servers 11, called PMS server for "Payphone Management System", enabling the network operator to supervise the various telephones. This server's function, connected via a router with modems to the switched telephone network 101, is to exchange with the payphone information concerning their operation and more generally the operation of the system. Furthermore, the PMS server manages the payphones initialization sessions and sets data from the information received from the payphones 10, as explained for example in prior art US 6,766,005.

Usually, a single PMS server is dimensioned to manage a limited number of payphones. When the number of managed payphones exceeds this limit then several PMS servers are to be used, these PMS servers may be connected between each other through a private network 12 of the type of LAN (Local Area Network).

The control activity and management of the installed bases is usually done and monitored by a central site, while the daily maintenance and field intervention are coordinated by regional sites responsible for one or several given payphone areas. Said maintenance and field intervention depend on the information retrieved from the PMS on a daily basis.

According to the invention, a method for distributing data between the PMS or the network of PMSs and end users' remote receiving modules is implemented. The method comprises automatically extracting at least one kind of data transmitted from the installed bases to the PMS, and dispatching the extracted data by means of a given dispatching media to a selected set of the remote receiving modules. The method according to the invention enables the right data to be automatically delivered to the right end users.

The invention also concerns a data dispatching device 13 to implement the method according to the invention in a telephony system 1 as described in figure 1.

According to the invention, the telephony system 1 comprises the data dispatching device 13 for distribution of data between the PMS and remote end users' receiving modules, the end users being for example the maintenance teams in the regional sites. The data dispatching device 13 comprises extracting means to automatically extract at least one kind of data transmitted from the installed bases 10 to the PMS 11 and dispatching means to dispatch the extracted data to a selected set of remote receiving modules, as fax machines 141, personal computers 142, 143 or mobiles. The telephony system then uses different media such as fax, e-mail or others such as SMS (Short Message System) to dispatch the data to the receiving modules. The data to be extracted, for example data related to the status of the payphone, its parameters, or the generated income, will be described in more details below. Such data dispatching device enables automatic distribution between central site and regional sites, making it much faster and convenient for the maintenance teams in the regional sites to be able to schedule and execute everyday maintenance and field intervention of the payphones.

Referring to an embodiment of the invention, the data dispatching device 13 includes a software to manage the extracting means and the dispatching means. The software may be implemented on a specific server 130, or on the PMS server itself. Further, a modem 131 is used for dispatching data through the PSTN when data are to be transmitted through phone calls to fax machines 141. Data might also be transmitted to mobiles, via a GSM modem or SMS gateway, or via a SMTP server 16 (Simple Mail Transfer Protocol) to personal computers 142, 143, by e-mails. Data may be transmitted for example over an Intranet or Internet type network.

Thus, the data dispatching device according to the invention ensures automatic distribution between central site and regional sites, making it much faster and convenient for the maintenance teams in the regional sites to be able to schedule and execute everyday maintenance and field intervention of the payphones.

Besides, thanks to the data dispatching device according to the invention, no specific remote workstations or high data flows or bandwidths are required in the regional sites, that are usually difficult and expensive to install.

In a preferred embodiment of the invention, each kind of data to be extracted is defined in a preconfigured request that can be stored in the server 130 of the data dispatching device. These requests are for example SQL requests (i.e. requests formalized in "Search Query Language") encoded in dedicated XML files (eXtended Markup Language). Therefore, each time a task has to be launched by the data dispatching device, it executes a SQL request that queries all linked PMS servers. This request is built with XML SQL encoded request attached to the task. The kind of data that need to be extracted and dispatched to the proper end users in the regional sites can be as follows. The data may for example relate to the status of the payphone, such as "in service", to eventual malfunctions called "active alarms", such as "handset removed", or other information like "mute payphone" indicating when a payphone has remained silent for a given period. The data may also be related to the parameters of the payphone, when one needs to know what is the up-to-date version of an installed base or identify whether the payphone being used is regular, for example by retrieving key information data. Further, some data may concern the generated income by the concerned installed bases.

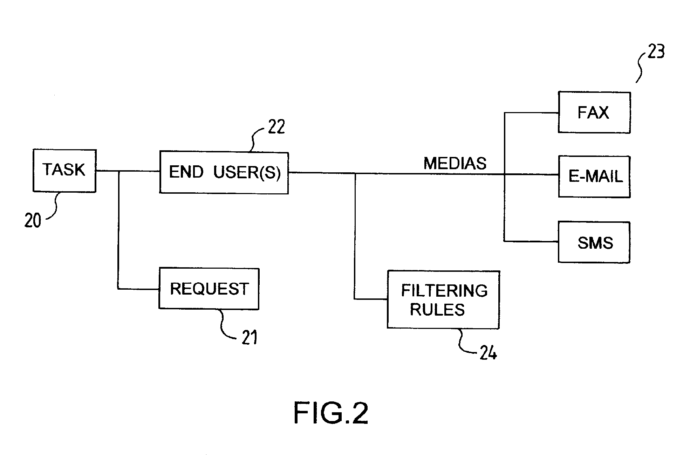

According to a further aspect of the invention, tasks are predefined in the data dispatching device, each task specifying a frequency occurrence, a specific request defining the kind of data to be retrieved when the task is launched, and a list of remote receiving modules to which said data is to be dispatched. Figure 2 is a schematic diagram showing how a task 20 is configured by specifying a request 21 and a list of remote receiving modules attached to selected end users 22. Each end user may have specific media configuration 23 (email address with output document format PDF or excel, fax number, etc.) and filtering rules to receive a part of the data retrieved from the database by the task request, said database being constituted by all the data retrieved from the installed bases by the PMS. These filtering rules are chosen by end users from a list of available rules. These rules can be calculated according to a filtering rules configuration module. The data dispatching device according to the invention thus enables to manage the dispatching of the data with an end-user hierarchy structure, which reproduces a team organisation.

Therefore, it is possible in the telephony system with the data dispatching device according to the invention to have the tasks executed automatically without needing any intervention. The end-user only needs to set-up a task once. Next, the data dispatching device launches the task at the scheduled time automatically and the right data is automatically delivered to the right end users. Should there be any modification in the telephony system for any reason, such as a payphone park behaviour change for example, all previously configured and scheduled tasks can be easily modified (or detected) and new tasks can be programmed so that the schedule always fits to the need.

Obviously, the embodiment shown in the Figures has only been given as an example and is definitely not limiting for the whole of solutions that may be implemented through this invention. Especially, the data dispatching device according to the invention can be used for all systems that need to dispatch data extracted from one or further databases constituted with data transmitted from installed bases to a PMS managing said bases, and on different kind of media. Further, the interface communication according to the invention can deal with all types of databases and is able to handle several databases at the same time.

## Claims

1. A data dispatching device (13) for distribution of data between a Payphone Management System (11) for managing installed bases (10) and remote end users' receiving modules (141, 142, 143), comprising extracting means to automatically extract at least one kind of data transmitted from the installed bases to the Payphone Management System (11) and dispatching means to dispatch the extracted date to a selected set of remote receiving modules.

2. A data dispatching device according to claim 1, further comprising storing means to store preconfigured requests in which each kind of data to be extracted is defined.

3. A data dispatching device according to claim 2, wherein the requests are stored in XML files.

4. A data dispatching device according to any of claims 2 or 3, wherein the storing means further store predefined tasks, each task specifying a frequency occurrence, a specific request defining the kind of data to be extracted and a list of remote receiving modules to which the data is to be dispatched.

5. A data dispatching device according to claim 4, further comprising a filtering rules configuration module with filtering rules that will associate a given end user only to the part of the tasks that concerns him with all available tasks.

6. A telephony System (1) comprising at least one Payphone Management System (11), installed bases (10) managed by said Payphone Management System and remote end users' receiving modules (141, 142, 143), wherein it further comprises :
a data dispatching device (13) according to any preceding claims for distribution of data between the Payphone Management System and the remote receiving modules, and
dispatching media to dispatch the extracted data to the selected set of remote receiving modules.

7. A telephony system according to claim 6, wherein it comprises :
at least two Payphone Management Systems, each Payphone Management System (11) managing a number of installed bases (10), said Payphone Management Systems being connected through a private network (12), and
one data dispatching device (13) for distribution of data between the network of Payphone Management Systems and the selected set of remote receiving modules.

8. A telephony system according to claims 6 or 7, wherein said dispatching media include e-mail and fax, or others such as SMS.

9. A method for distributing data between a Payphone Management System for managing installed bases and remote end users' receiving modules comprising:
- automatically extracting at least one kind of data transmitted from the installed bases to the Payphone Management System and
- dispatching the extracted data by a given dispatching media to a selected set of the remote receiving modules.

10. A method according to claim 9, wherein it further comprises first configuring requests in which each kind of data to be extracted is defined.

11. A method according to claim 10, wherein it further comprises defining tasks, each task specifying a specific frequency occurrence, a specific request defining the kind of data to be extracted and a list of end users that will receive the data extracted by this task's request.

12. A method according to claim 11, wherein it further comprises subscription by the end users to given tasks, in order to have their receiving modules put in the lists of remote receiving modules of the subscribed tasks.

13. A method according to claims 11 or 12, wherein it further comprises the declaration by the end users of a media configuration of their receiving modules in order to select the dispatching media.
